# EUROPEAN PATENT SPECIFICATION

(11) **EP 3 797 932 B1**
(45) Date of publication and mention of the grant of the patent: **20.12.2023**
(21) Application number: 20197135.5
(22) Date of filing: 21.09.2020
(51) Int. Cl.: B25J 5/00, B25J 9/16, B60L 58/20, H02J 7/00

(54) **MOBILE ROBOT**
MOBILER ROBOTER
ROBOT MOBILE

(30) Priority: 30.09.2019 JP 2019179569
(43) Date of publication of application: 31.03.2021
(73) Proprietor: Seiko Epson Corporation, Tokyo 160-8801 (JP)
(72) Inventor: KAMIJO, Takahiro, Suwa-shi, Nagano 392-8502 (JP)
(74) Representative: MERH-IP Matias Erny Reichl Hoffmann Patentanwälte PartG mbB

(56) References cited:
- EP-A1- 2 868 446
- EP-A1- 2 868 446
- CN-A- 107 322 600
- JP-A- 2000 326 270
- JP-A- 2000 326 271
- JP-A- 2008 307 668

## Description

### BACKGROUND

### 1. Technical Field

The present disclosure relates to a mobile robot.

### 2. Related Art

Recently, in factories, due to labor cost rise and labor shortage, work manually performed in the past has been increasingly automated by various robots and robot peripherals. Further, recently, as shown in JP-A-2000-326270, wheeled automated guided vehicles with robots, i.e., mobile robots have autonomously moved and performed work at movement destinations.

The mobile robot shown in JP-A-2000-326270 includes a robot arm, a movement mechanism that moves the robot arm, and a battery that supplies electric power to the movement mechanism and the robot arm. That is, the movement mechanism and the robot arm have configurations driven by the same electrical system. Further, in the mobile robot shown in JP-A-2000-326270, regeneration power when the robot arm is driven is stored in the battery. Thereby, the available time of the battery may be extended.

For example, when increase of the operation speed of the robot is desired or the like, when the drive voltage of the robot arm is set to be higher, the drive voltage of the robot arm and the drive voltage of the movement mechanism may be different. Here, the voltage of the regeneration power of the robot arm and the voltage of the battery are different, and there is a problem that it may be impossible to store the regeneration power of the robot arm in the battery. Further examples of mobile robotic devices with multiple operating voltages are disclosed in JP2000326271, EP2868446, CN107322600, JP2008307668.

### SUMMARY

The present disclosure can be implemented as follows.

A mobile robot of an application example includes a vehicle having a secondary cell that outputs a first voltage, a first motor driven by the first voltage, and a first circuit that supplies electric power of the secondary cell to the first motor, a robot having a robot arm, a second motor that drives the arm by a second voltage different from the first voltage, and a second circuit that supplies the electric power of the secondary cell to the second motor and supplies regeneration power of the second motor to the secondary cell, and coupled to the vehicle, wherein the second circuit has a voltage conversion unit that mutually converts the first voltage and the second voltage.

### BRIEF DESCRIPTION OF THE DRAWINGS

FIG. 1 is a side view showing a mobile robot according to a first embodiment.
FIG. 2 is a block diagram showing details of the mobile robot shown in FIG. 1.
FIG. 3 is a block diagram showing details of a mobile robot according to a second embodiment.
FIG. 4 is a side view showing a mobile robot according to a third embodiment.

### DESCRIPTION OF EXEMPLARY EMBODIMENTS

As below, a mobile robot according to the present disclosure will be explained in detail based on embodiments shown in the accompanying drawings.

### First Embodiment

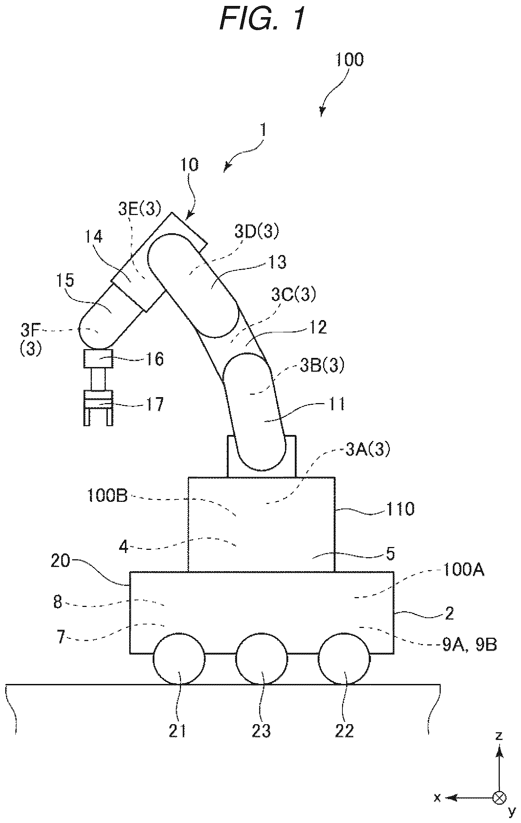

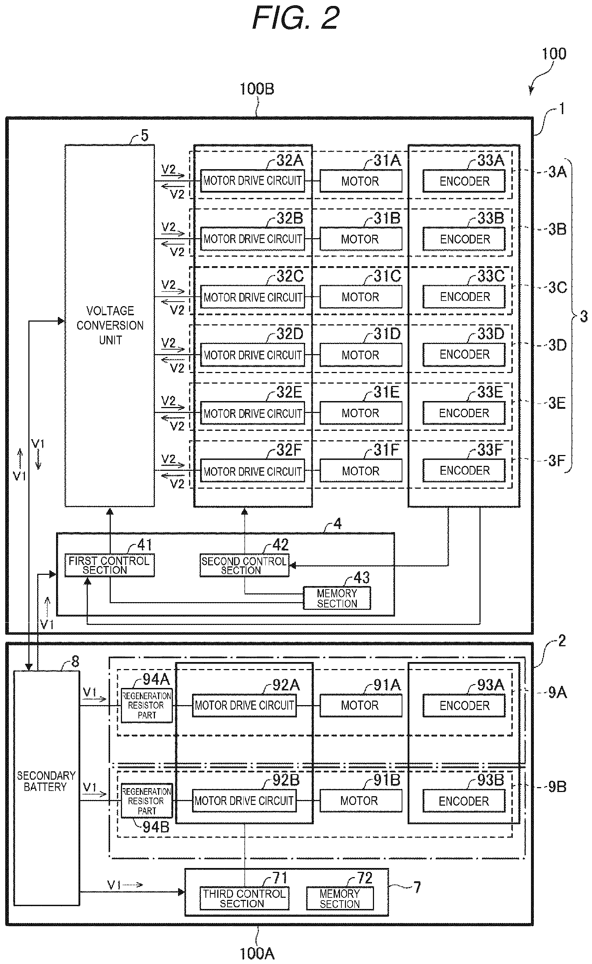

FIG. 1 is the side view showing the mobile robot according to the first embodiment. FIG. 2 is the block diagram showing details of the mobile robot shown in FIG. 1.

In FIG. 1, for convenience of explanation, an x-axis, a y-axis, and a z-axis are shown as three axes orthogonal to one another. Hereinafter, directions parallel to the x-axis are also referred to as "x-axis directions", directions parallel to the y-axis are also referred to as "y-axis directions", and directions parallel to the z-axis are also referred to as "z-axis directions".

Hereinafter, for convenience of explanation, the +z-axis direction in FIG. 1, i.e., the upside is also referred to as "upper" or "above" and the -z-axis direction, i.e., the downside is also referred to as "lower" or "below". Further, the z-axis directions in FIG. 1, i.e., upward and downward directions are referred to as "vertical directions" and the x-axis directions and the y-axis directions, i.e., leftward and rightward directions are referred to as "horizontal directions".

A mobile robot 100 shown in FIG. 1 is an apparatus used for work of e.g. holding, transport, assembly, inspection, etc. of works including electronic components and electronic apparatuses. The mobile robot 100 includes a robot 1 and a vehicle 2. The vehicle 2 will be explained as not being contained in the robot 1 in the embodiment, however, this may be contained in the robot 1. That is, the vehicle 2 may be a component element of the robot 1 or not.

The robot 1 shown in FIG. 1 is the so-called six-axis vertical articulated robot and has a base 110, a robot arm 10 coupled to the base 110, drive units 3, a robot control unit 4, and a voltage conversion unit 5.

The base 110 supports the robot arm 10. The base 110 has a housing and, inside of the housing, e.g. a drive device that drives the robot arm 10, a communication unit (not shown) for communication with the robot control unit 4, etc. are provided. Further, the origin of the robot coordinate system is set in an arbitrary position e.g. the center of gravity of the base 110. The origin is a control point of the movement by the vehicle 2, which will be described later.

Note that the base 110 is not limited to the shape as shown in the drawing, but may be formed by e.g. a plate-like member and a plurality of legs as long as the base has the function of supporting the robot arm 10.

Or, the base 110 may be omitted or at least partially provided in the vehicle 2.

The robot arm 10 shown in FIG. 1 has a proximal end coupled to the base 110 and includes an arm 11, an arm 12, an arm 13, an arm 14, an arm 15, and an arm 16 as a plurality of arms. These arm 11 to arm 16 are sequentially coupled from the proximal end toward the distal end. The respective arm 11 to arm 16 are pivotable relative to the adjacent arms or base 110.

Further, as shown in FIG. 2, the robot 1 has the drive units 3 as drive units that drive the robot arm. The drive units 3 have a drive unit 3A that pivots the arm 11 relative to the base 110, a drive unit 3B that pivots the arm 12 relative to the arm 11, a drive unit 3C that pivots the arm 13 relative to the arm 12, a drive unit 3D that pivots the arm 14 relative to the arm 13, a drive unit 3E that pivots the arm 15 relative to the arm 14, and a drive unit 3F that pivots the arm 16 relative to the arm 15.

The drive unit 3A has a motor 31A as a second motor, a motor drive circuit 32A, an encoder 33A, a reducer (not shown), etc. The drive unit 3B has a motor 31B as the second motor, a motor drive circuit 32B, an encoder 33B, a reducer (not shown), etc. The drive unit 3C has a motor 31C as the second motor, a motor drive circuit 32C, an encoder 33C, a reducer (not shown), etc. The drive unit 3D has a motor 31D as the second motor, a motor drive circuit 32D, an encoder 33D, a reducer (not shown), etc. The drive unit 3E has a motor 31E as the second motor, a motor drive circuit 32E, an encoder 33E, a reducer (not shown), etc. The drive unit 3F has a motor 31F as the second motor, a motor drive circuit 32F, an encoder 33F, a reducer (not shown), etc.

The motor 31A is electrically coupled to a second control section 42, which will be described later, via the motor drive circuit 32A. The motor 31B is electrically coupled to the second control section 42 via the motor drive circuit 32B. The motor 31C is electrically coupled to the second control section 42 via the motor drive circuit 32C. The motor 31D is electrically coupled to the second control section 42 via the motor drive circuit 32D. The motor 31E is electrically coupled to the second control section 42 via the motor drive circuit 32E. The motor 31F is electrically coupled to the second control section 42 via the motor drive circuit 32F.

The second control section 42 respectively independently controls the conduction conditions to the motor drive circuit 32A to motor drive circuit 32F, and thereby, driving of the motor 31A to motor 31F is controlled.

The encoder 33A to encoder 33F are examples as operating state sensors that sense the operating state of the robot arm 10. The encoder 33A to encoder 33F are respectively electrically coupled to the second control section 42, and detected position information, i.e., electrical signals corresponding to the sensing results are transmitted to the second control section 42. According to the configuration, the second control section 42 may control driving of the motor 31A to motor 31F and switch between a first mode and a second mode, which will be described later, based on the sensing results of the encoder 33A to encoder 33F.

Further, as shown in FIG. 1, an end effector 17 holding a work object is attached to the distal end of the robot arm 10. In the illustrated configuration, the end effector 17 grips the work object by bringing a plurality of e.g. two fingers closer to each other or away from each other. Note that the end effector 17 is not limited to the configuration, but may be a suction hand, magnetic hand, or the like.

When the end effector 17 is driven by a motor, the regeneration power therefor may be supplied to a secondary cell 8.

The robot control unit 4 has a first control section 41 that controls operation of the voltage conversion unit 5, which will be described later, the second control section 42 that controls driving of the motor drive circuit 32A to motor drive circuit 32F, and a memory section 43.

The first control section 41 is a control section having a CPU (Central Processing Unit) and reading and executing various programs etc. stored in the memory section 43. Switching of the switch of the voltage conversion unit 5 to be described later is controlled by a command signal generated by the first control section 41.

The second control section 42 has a CPU (Central Processing Unit) and reads and executes various programs etc. stored in the memory section 43. The robot arm 10 may execute predetermined work by a command signal generated by the second control section 42.

The memory section 43 stores various programs etc. that can be executed by the first control section 41 and the second control section 42. The memory section 43 includes e.g. a volatile memory such as a RAM (Random Access Memory), a nonvolatile memory such as a ROM (Read Only Memory), and a detachable external memory device. The coupling between the memory section 43 and the first control section 41 and second control section 42 may be not only wired coupling but also wireless coupling, or coupling by communication via a network such as the Internet.

Next, the vehicle 2 will be explained.

The vehicle 2 is configured by an autonomous traveling system and moves the robot 1.

The vehicle 2 has a plurality of wheels, i.e., a pair of front wheels 21, a pair of rear wheels 22, and a pair of drive wheels 23, a vehicle main body 20 in which these wheels are placed, a vehicle control unit 7, the secondary cell 8, and drive units 9A, 9B.

The pair of drive wheels 23 are examples of movement mechanisms and provided between the pair of front wheels 21 and the pair of rear wheels 22. One drive wheel 23 is driven by the drive unit 9A and the other drive wheel 23 is driven by the drive unit 9B.

The drive unit 9A has a motor 91A as a first motor, a motor drive circuit 92A, an encoder 93A, a regeneration resistor part 94A, and a reducer (not shown), etc. The drive unit 9B has a motor 91B as the first motor, a motor drive circuit 92B, an encoder 93B, a regeneration resistor part 94B, and a reducer (not shown), etc.

The motor 91A is electrically coupled to a third control section 71, which will be described later, via the motor drive circuit 92A. The motor 91B is electrically coupled to the third control section 71 via the motor drive circuit 92B.

The third control section 71 respectively independently controls the conduction conditions to the motor drive circuit 92A and the motor drive circuit 92B, and thereby, driving of the motor 91A and the motor 91B is controlled.

The encoder 93A and the encoder 93B are respectively electrically coupled to the third control section 71 and electrical signals corresponding to the detected position information are transmitted to the third control section 71. According to the configuration, the third control section 71 may control the driving of the motor 91A and the motor 91B based on the detection results of the encoder 93A and the encoder 93B.

The regeneration power of the motor 91A is supplied to the regeneration resistor part 94A via the motor drive circuit 92A and the regeneration power of the motor 91B is supplied to the regeneration resistor part 94B via the motor drive circuit 92B. The regeneration resistor part 94A and the regeneration resistor part 94B are regeneration power absorbing circuits that absorb the regeneration power, respectively have resistors (not shown), and convert the regeneration power into heat and release the heat. That is, the regeneration power of the motor 91A and the motor 91B is not stored in the secondary cell 8.

As described above, the vehicle 2 has the regeneration resistor part 94A and the regeneration resistor part 94B that convert the regeneration power of the motor 91A and the motor 91B as the first motors into heat. Thereby, when the vehicle 2 urgently stops, supply of the excessive regeneration power generated in the motor 91A and the motor 91B to the secondary cell 8 is prevented.

Note that the regeneration resistor part 94A and the regeneration resistor part 94B may be omitted and the regeneration power of the motor 91A and the motor 91B may be stored in the secondary cell 8.

In the embodiment, the pair of front wheels 21 and the pair of rear wheels 22 are driven rollers. However, the pair of front wheels 21 and the pair of rear wheels 22 may be coupled to the drive units.

The drive wheels 23 are respectively configured to be forwardly and backwardly rotatable by the drive unit 9A and the drive unit 9B. Accordingly, the traveling direction may be changed by adjustment of at least one of the rotation speed or the rotation direction of the respective drive wheels 23. Further, in the embodiment, the front wheels 21, the rear wheels 22, and the drive wheels 23 are configured not to rotate about the z-axis, however, at least ones of the front wheels 21, the rear wheels 22, or the drive wheels 23 may be configured to rotate about the z-axis. In this case, the traveling direction may be changed by adjustment of the amount of rotation about the z-axis.

Note that "movement" in this specification includes not only "linear movement", "meandering", and "reciprocation" but also "rotation". The number of wheels of the vehicle 2 is not particularly limited. The configuration of the vehicle 2 is not limited to the above described wheeled type, but may be e.g. a configuration with a caterpillar, a configuration walking with a plurality of legs, or the like.

The vehicle control unit 7 has the third control section 71 that controls the driving of the motor drive circuit 92A and the motor drive circuit 92B and a memory section 72.

The third control section 71 has e.g. a CPU (Central Processing Unit) and reads and executes various programs etc. stored in the memory section 72. The vehicle 2 may travel on a predetermined route by a command signal generated in the third control section 71.

The memory section 72 stores various programs etc. that can be executed by the third control section 71. The memory section 72 includes e.g. a volatile memory such as a RAM (Random Access Memory), a nonvolatile memory such as a ROM (Read Only Memory), and a detachable external memory device. The coupling between the memory section 72 and the third control section 71 may be not only wired coupling but also wireless coupling, or coupling by communication via a network such as the Internet.

As shown in FIG. 1, the secondary cell 8 outputs a first voltage V1 and is provided inside of the vehicle main body 20. The secondary cell 8 can be repeatedly charged and discharged and supplies electric power to the respective parts of the mobile robot 100. That is, the secondary cell 8 is electrically coupled to the motor drive circuit 32A to motor drive circuit 32F and robot control unit 4 of the robot 1 and the vehicle control unit 7 and drive unit 9A and drive unit 9B of the vehicle 2, and supplies electric power to those. Note that the secondary cell is also generally called "storage battery", "rechargeable battery", or "battery". The secondary cell refers to a battery that stores electricity by charging for use as a battery and can be repeatedly used.

When the stored electric charge is lost, the secondary cell 8 is charged from an external power supply (not shown) for use. The secondary cell 8 is not particularly limited to, but includes e.g. a nickel-cadmium battery, nickel-hydrogen battery, sodium battery, magnesium battery, lithium-ion battery, and lead storage battery as long as the battery can be repeatedly charged and discharged.

Here, circuits of the mobile robot 100 shown in FIG. 2 have a first circuit 100A at the vehicle 2 side and a second circuit 100B at the robot 1 side.

The first circuit 100A is a circuit that supplies electric power to the motor 91A and the motor 91B as the first motors. That is, the first circuit 100A includes electric wiring containing the motor drive circuit 92A between the secondary cell 8 and the motor 91A and electric wiring containing the motor drive circuit 92B between the secondary cell 8 and the motor 91B.

The second circuit 100B is a circuit that supplies the electric power of the secondary cell 8 to the motor 31A to motor 31F as the second motors and supplies the regeneration power of the motor 31A to motor 31F to the secondary cell 8. That is, the second circuit 100B includes electric wiring containing the voltage conversion unit 5 between the secondary cell 8 and the motor 31A to motor 31F and the motor drive circuit 32A to motor drive circuit 32F and the voltage conversion unit 5. The regeneration power of the motor 31A to motor 31F is supplied to the secondary cell 8 respectively via the motor drive circuit 32A to motor drive circuit 32F and the voltage conversion unit 5.

The above described first circuit 100A and second circuit 100B are provided, and thereby, the respective parts of the mobile robot 100 are driven by the electric power from the secondary cell 8. In other words, the robot 1 and the vehicle 2 have the secondary cell 8 as the single power supply in common and the respective parts of the robot 1 and the respective parts of the vehicle 2 are driven by the electric power from the secondary cell 8.

The motor 91A and the motor 91B of the vehicle 2 are driven by the first voltage V1. On the other hand, the motor 31A to motor 31F of the robot arm 10 are driven by a second voltage V2 different from the first voltage V1. As below, as an example, a case where the second voltage V2 is larger than the first voltage V1 will be explained. Note that these motor 91A, motor 91B, and motor 31A to motor 31F are driven by alternating-current voltages and the first voltage V1 and the second voltage V2 refer to the maximum values of the amplitude of the voltage waveforms.

Here, converters such as DC/DC converters may be provided between the secondary cell 8 and the motor drive circuit 92A and motor drive circuit 92B. The output voltage of the secondary cell 8 may be unstable depending on the state of charge, remaining charge, or the like. The converters are provided, and thereby, the voltages supplied from the secondary cell 8 to the motor 91A and the motor 91B may be stabilized for stable operation of the control circuits, and adjustment to raise the absolute maximum rating of the motor 91A and motor 91B, the encoder 93A and encoder 93B, etc. or the like may be unnecessary. Further, the converters are provided, and thereby, the distances between the motor drive circuit 92A and motor drive circuit 92B and the secondary cell 8 may be made longer and, when the voltage supply from the secondary cell 8 is turned off, the data evacuation time can be secured.

Next, the voltage conversion unit 5 will be explained.

The voltage conversion unit 5 is a circuit that may mutually convert the first voltage V1 and the second voltage V2. As the voltage conversion unit 5, e.g. an isolated or non-isolated DC/DC bidirectional converter may be used, and the isolated DC/DC bidirectional converter is preferably used. Thereby, the voltage range for conversion may be increased for the better versatility.

The robot arm 10 has the arm 11 to arm 16 as the plurality of arms and the motor 31A to motor 31F as the plurality of second motors that drive the arms 11 to 16, respectively. The respective motor 31A to motor 31F are electrically coupled to the same voltage conversion unit 5. Thereby, as will be described later, whether the electric power is supplied to the motor 31A to motor 31F or the regeneration power is supplied to the secondary cell 8 may be collectively changed by a simple operation of switching the single voltage conversion unit 5. Therefore, control of switching between the first mode and the second mode to be described later may be easily performed.

As shown FIG. 1, the robot 1 has the base 110 supporting the robot arm 10, and the voltage conversion unit 5 is placed within the base 110. That is, in the embodiment, the robot control unit 4 and the voltage conversion unit 5 are collectively provided inside of the base 110. Thereby, the configuration of the robot 1 may be simplified.

The voltage conversion unit 5 has a switch (not shown) and the switch is switched by the first control section 41. By the switching, the first mode and the second mode to be described later are switched.

The first mode is a state in which the electric power of the secondary cell 8 is supplied to the motor 31A to motor 31F as the second motors. In the first mode, the first voltage V1 supplied from the secondary cell 8 is converted into the second voltage V2 and respectively output to the motor drive circuit 32A to motor drive circuit 32F. Thereby, the motor 31A to motor 31F driven by the second voltage V2 may be driven by the electric power of the secondary cell 8 outputting the first voltage V1.

On the other hand, the second mode is a state in which the regeneration power of the motor 31A to motor 31F as the second motors is supplied to the secondary cell 8. In the second mode, the regeneration power of the motor 31A to motor 31F as the second voltage V2 is converted into the first voltage V1 and output to the secondary cell 8. Thereby, the regeneration power as the second voltage V2, which is converted into heat and released in the related art, may be converted into the first voltage V1 and stored in the secondary cell 8. Therefore, the time to drive the mobile robot 100 on a single charge may be extended.

In a case where the operation speed of the robot arm 10 is increased or the like, the power consumption increases with the increase of the second voltage V2. The regeneration power of the motor 31A to motor 31F is supplied to the secondary cell 8, and thereby, reduction of the remaining power of the secondary cell 8 may be suppressed. Accordingly, when the second voltage V2 is increased, the above described effects are more remarkable and effective.

As described above, the voltage conversion unit 5 converts from the first voltage V1 into the second voltage V2 in the first mode in which the electric power of the secondary cell 8 is supplied to the motor 31A to motor 31F as the second motors, and converts from the second voltage V2 into the first voltage V1 in the second mode in which the regeneration power of the motor 31A to motor 31F is supplied to the secondary cell 8. Thereby, the regeneration power of the motor 31A to motor 31F may be stored in the secondary cell 8. Therefore, the time to drive the mobile robot 100 on a single charge may be extended.

The robot 1 has the first control section 41 as the control section that controls the operation of the voltage conversion unit 5 to switch between the first mode and the second mode. Thereby, for example, the first mode and the second mode may be switched appropriately at the following times.

The regeneration power is generated when the motor 31A to motor 31F make decelerated motion, and the first control section 41 controls the operation of the voltage conversion unit 5 to set the second mode when the motor 31A to motor 31F make decelerated motion and set the first mode when the motor 31A to motor 31F make accelerated motion and uniform motion.

Specifically, the first control section 41 specifies the operating state of the robot arm 10, i.e., one state of the decelerated motion, the accelerated motion, and the uniform motion based on the encoder values transmitted from the encoder 33A to encoder 33F as needed. Then, the switch of the voltage conversion unit 5 is switched according to the result and the first mode and the second mode are switched.

As described above, the robot 1 has the encoder 33A to encoder 33F as the operating state sensors that sense the operating state of the robot arm 10. Further, the first control section 41 as the control section controls the operation of the voltage conversion unit 5 based on the sensing results of the encoder 33A to encoder 33F. Thereby, switching between the first mode and the second mode may be performed at proper times.

Note that the switching between the first mode and the second mode is not limited to that described above, but may be performed based on an operation program, for example. That is, for execution of the operation program, when the state of the robot arm 10 is known as one state of the decelerated motion, the accelerated motion, and the uniform motion, the first mode and the second mode may be switched based on an elapsed time or the like.

As described above, the mobile robot 100 includes the vehicle 2 having the secondary cell 8 that outputs the first voltage V1, the motor 91A and the motor 91B as the first motors driven by the first voltage V1, and the first circuit 100A that supplies the electric power of the secondary cell 8 to the motor 91A and the motor 91B, and the robot 1 having the robot arm 10, the motor 31A to motor 31F as the second motors that drive the arm 11 to arm 16 by the second voltage V2 different from the first voltage V1, and the second circuit 100B that supplies the electric power of the secondary cell 8 to the motor 31A to motor 31F and supplies the regeneration power of the motor 31A to motor 31F to the secondary cell 8 and coupled to the vehicle 2. Further, the second circuit 100B has the voltage conversion unit 5 that may mutually convert the first voltage V1 and the second voltage V2. Thereby, the regeneration power as the second voltage V2, which is converted into heat and released in the related art, may be converted into the first voltage V1 and stored in the secondary cell 8. Therefore, the time to drive the mobile robot 100 on a single charge may be extended.

According to the configuration, when the operation of the robot 1 is stopped, a user moves the robot arm 10 by applying an external force to the robot arm 10, and thereby, the regeneration power may be generated from the motor 31A to motor 31F and the secondary cell 8 may be charged.

### Second Embodiment

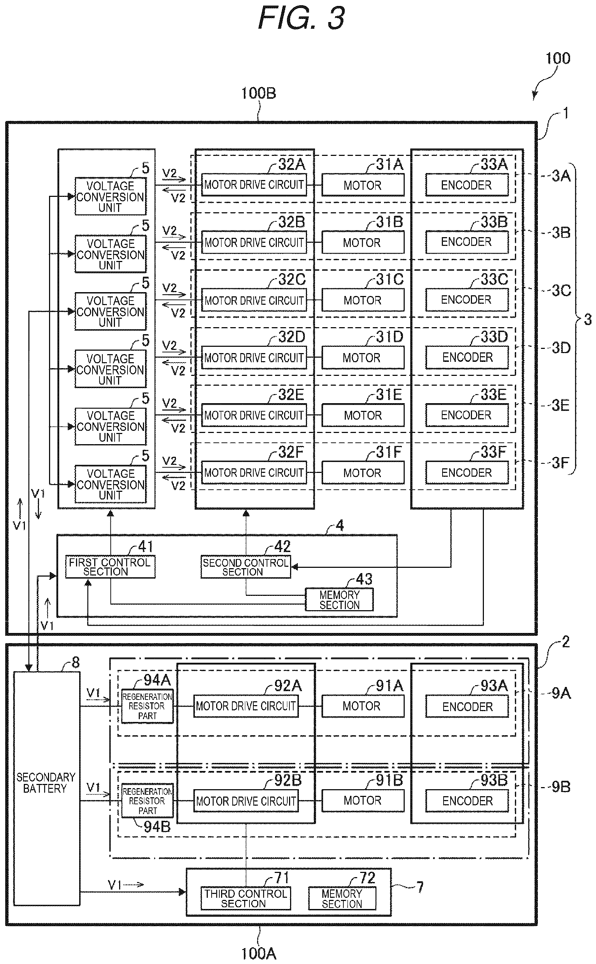

FIG. 3 is the block diagram showing details of the mobile robot according to the second embodiment.

As below, the second embodiment of the mobile robot according to the present disclosure will be explained with reference to FIG. 3, and the explanation will be made with a focus on differences from the above described first embodiment and the explanation of the same items will be omitted.

As shown in FIG. 3, in the embodiment, six of the voltage conversion units 5 are provided. That is, one voltage conversion unit 5 is provided for each of the drive units 3A to 3F. Further, the first control section 41 respectively independently controls the six voltage conversion units 5.

The robot arm 10 has the arm 11 to arm 16 as the plurality of arms and the motor 31A to motor 31F as the plurality of second motors that drive the arms 11 to 16, respectively. The plurality of, i.e., six voltage conversion units 5 are respectively provided for the motor 31A to motor 31F. Thereby, the first mode and the second mode may be switched for each of the voltage conversion units 5, and the operation of the motor 31A to motor 31F may be varied more widely.

### Third Embodiment

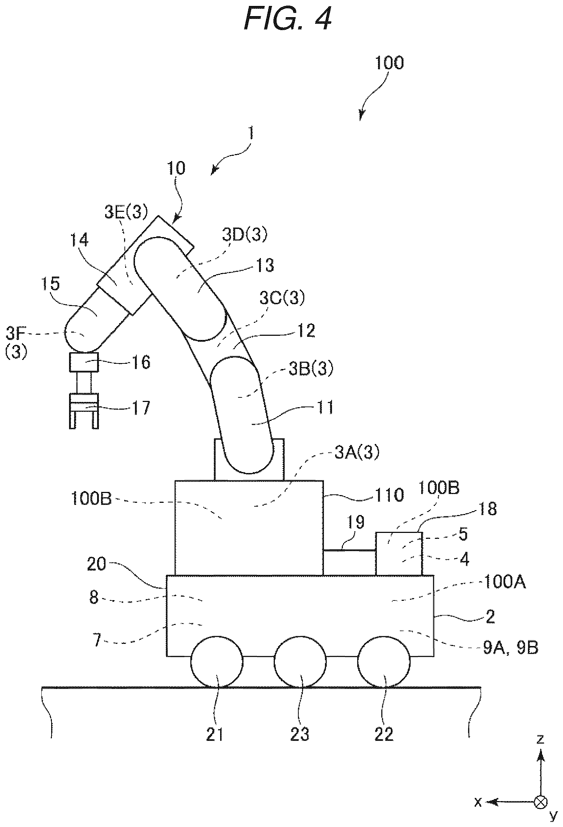

FIG. 4 is the side view showing the mobile robot according to the third embodiment.

As below, the third embodiment of the mobile robot according to the present disclosure will be explained with reference to FIG. 4, and the explanation will be made with a focus on differences from the above described first embodiment and the explanation of the same items will be omitted.

As shown in FIG. 4, the robot 1 has a casing 18 provided outside of the base 110. Inside of the casing 18, the robot control unit 4 and the voltage conversion unit 5 are provided. Further, the casing 18 and the base 110 are coupled via a junction cable 19. The junction cable 19 contains a part of the wiring of the second circuit 100B.

As described above, the robot 1 has the base 110 supporting the robot arm 10. Further, the voltage conversion unit 5 is placed outside of the base 110. Thereby, for example, maintenance of the voltage conversion unit 5 may be easily performed.

As above, the mobile robot according to the present disclosure is explained based on the illustrated embodiments, The robots of the mobile robots according to the above described embodiments are of the systems including the six-axis vertical articulated robots, however, the number of axes of the vertical articulated robot may be five or less, seven, or more. Or, horizontal articulated robots may be used in place of the vertical articulated robots.

## Claims

1. A mobile robot comprising:
a vehicle (2) having a secondary cell (8) that outputs a first voltage (V1), a first motor (91A, 91B) driven by the first voltage (V1), and a first circuit (100A) that supplies electric power of the secondary cell (8) to the first motor (91A, 91B); and
a robot having a robot arm (10), a second motor (31A-31F) that drives the arm by a second voltage (V2) different from the first voltage (V1), and a second circuit (100B) that supplies the electric power of the secondary cell (8) to the second motor (31A-31F) and supplies regeneration power of the second motor (31A-31F) to the secondary cell (8), and coupled to the vehicle(2), wherein
the second circuit (100B) has a voltage conversion unit (5) that mutually converts the first voltage (V1) and the second voltage (V2).

2. The mobile robot according to claim 1, wherein
the voltage conversion unit converts from the first voltage into the second voltage in a first mode in which the electric power of the secondary cell is supplied to the second motor and converts from the second voltage into the first voltage in a second mode in which the regeneration power of the second motor is supplied to the secondary cell.

3. The mobile robot according to claim 2, wherein
the robot has a control unit that controls operation of the voltage control unit to switch between the first mode and the second mode.

4. The mobile robot according to claim 3, wherein
the robot has an operating state sensor that senses an operating state of the robot arm, and
the control unit controls the operation of the voltage conversion unit based on a sensing result of the operating state sensor.

5. The mobile robot according to claim 3, wherein
the control unit controls the operation of the voltage conversion unit based on an operation time of the robot arm.

6. The mobile robot according to claim 1, wherein
the robot arm has a plurality of the arms and a plurality of the second motors respectively driving the arms, and
a plurality of the voltage conversion units are respectively provided for the second motors.

7. The mobile robot according to claim 1, wherein
the robot arm has a plurality of the arms and a plurality of the second motors respectively driving the arms, and
the respective second motors are electrically coupled to the same voltage conversion unit.

8. The mobile robot according to claim 1, wherein
the robot has a base supporting the robot arm, and the voltage conversion unit is placed within the base.

9. The mobile robot according to claim 1, wherein
the robot has a base supporting the robot arm, and the voltage conversion unit is placed outside of the base.

10. The mobile robot according to claim 1, wherein
the vehicle has a regeneration resistor part that converts the regeneration power of the first motor into heat.

## Patentansprüche

1. Beweglicher Roboter, der Folgendes umfasst:
ein Fahrzeug (2), das eine Sekundärzelle (8), die eine erste Spannung (V1) ausgibt, einen ersten Motor (91A, 91B), der durch die erste Spannung (V1) angetrieben wird, und eine erste Schaltung (100A), die die elektrische Leistung der Sekundärzelle (8) dem ersten Motor (91A, 91B) zuführt, aufweist; und
einen Roboter, der einen Roboterarm (10), einen zweiten Motor (31A-31F), der den Arm durch eine zweite Spannung (V2), die sich von der ersten Spannung (V1) unterscheidet, antreibt, und eine zweite Schaltung (100B), die die elektrische Leistung der Sekundärzelle (8) dem zweiten Motor (31A-31F) zuführt, aufweist, und eine Regenerationsleistung des zweiten Motors (31A-31F) der Sekundärzelle (8) zuführt, und der mit dem Fahrzeug (2) gekoppelt ist, wobei die zweite Schaltung (100B) eine Spannungsumsetzungseinheit (5) hat, die die erste Spannung (V1) und die zweite Spannung (V2) wechselseitig umsetzt.

2. Beweglicher Roboter nach Anspruch 1, wobei
die Spannungsumsetzungseinheit von der ersten Spannung in die zweite Spannung in einer ersten Betriebsart umsetzt, wobei die elektrische Leistung der Sekundärzelle dem zweiten Motor zugeführt wird, und von der zweiten Spannung in die erste Spannung in einer zweiten Betriebsart umsetzt, wobei die Regenerationsleistung des zweiten Motors der Sekundärzelle zugeführt wird.

3. Beweglicher Roboter nach Anspruch 2, wobei
der Roboter eine Steuereinheit hat, die den Betrieb der Spannungssteuereinheit steuert, um zwischen der ersten Betriebsart und der zweiten Betriebsart umzuschalten.

4. Beweglicher Roboter nach Anspruch 3, wobei
der Roboter einen Betriebszustandsensor hat, der einen Betriebszustand des Roboterarms erfasst, und
die Steuereinheit den Betrieb der Spannungsumsetzungseinheit auf der Basis eines Messergebnisses des Betriebszustandssensors steuert.

5. Beweglicher Roboter nach Anspruch 3, wobei
die Steuereinheit den Betrieb der Spannungsumsetzungseinheit auf der Basis einer Betriebszeit des Roboterarms steuert.

6. Beweglicher Roboter nach Anspruch 1, wobei
der Roboterarm mehrere Arme und mehrere zweite Motoren, die jeweils die Arme antreiben, aufweist, und
mehrere Spannungsumsetzungseinheiten jeweils für die zweiten Motoren vorgesehen sind.

7. Beweglicher Roboter nach Anspruch 1, wobei
der Roboterarm mehrere Arme und mehrere zweite Motoren, die jeweils die Arme antreiben, aufweist, und
die jeweiligen zweiten Motoren mit der gleichen Spannungsumsetzungseinheit elektrisch gekoppelt sind.

8. Beweglicher Roboter nach Anspruch 1, wobei
der Roboter eine Basis hat, die den Roboterarm trägt, und die Spannungsumsetzungseinheit in der Basis angeordnet ist.

9. Beweglicher Roboter nach Anspruch 1, wobei
der Roboter eine Basis hat, die den Roboterarm trägt, und die Spannungsumsetzungseinheit außerhalb der Basis angeordnet ist.

10. Beweglicher Roboter nach Anspruch 1, wobei
das Fahrzeug ein Regenerationswiderstandselement besitzt, das die Regenerationsleistung des ersten Motors in Wärme umsetzt.

## Revendications

1. Robot mobile comprenant :
un véhicule (2) ayant une cellule secondaire (8) qui délivre une première tension (V1), un premier moteur (91A, 91B) entraîné par la première tension (V1), et un premier circuit (100A) qui fournit la puissance électrique de la cellule secondaire (8) au premier moteur (91A, 91B) ; et
un robot ayant un bras de robot (10), un deuxième moteur (31A-31F) qui entraîne le bras par une deuxième tension (V2) différente de la première tension (V1), et un deuxième circuit (100B) qui fournit la puissance électrique de la cellule secondaire (8) au deuxième moteur (31A-31F) et qui fournit une puissance de régénération du deuxième moteur (31A-31F) à la cellule secondaire (8), et qui est couplé au véhicule (2), dans lequel
le deuxième circuit (100B) a une unité de conversion de tension (5) qui convertit mutuellement la première tension (V1) et la deuxième tension (V2).

2. Robot mobile selon la revendication 1, dans lequel
l'unité de conversion de tension convertit la première tension en deuxième tension dans un premier mode où la puissance électrique de la cellule secondaire est fournie au deuxième moteur, et convertit la deuxième tension en première tension dans un deuxième mode où la puissance de régénération du deuxième moteur est fournie à la cellule secondaire.

3. Robot mobile selon la revendication 2, dans lequel
le robot a une unité de commande qui commande le fonctionnement de l'unité de commande de tension pour commuter entre le premier mode et le deuxième mode.

4. Robot mobile selon la revendication 3, dans lequel
le robot a un capteur d'état de fonctionnement qui détecte un état de fonctionnement du bras de robot, et
l'unité de commande commande le fonctionnement de l'unité de conversion de tension sur la base d'un résultat de détection du capteur d'état de fonctionnement.

5. Robot mobile selon la revendication 3, dans lequel
l'unité de commande commande le fonctionnement de l'unité de conversion de tension sur la base d'un temps de fonctionnement du bras de robot.

6. Robot mobile selon la revendication 1, dans lequel
le bras de robot a une pluralité de bras et une pluralité de deuxièmes moteurs entraînant respectivement les bras, et
une pluralité d'unités de conversion de tension sont respectivement prévues pour les deuxièmes moteurs.

7. Robot mobile selon la revendication 1, dans lequel
le bras de robot a une pluralité de bras et une pluralité de deuxièmes moteurs entraînant respectivement les bras, et
les deuxièmes moteurs respectifs sont couplés électriquement à la même unité de conversion de tension.

8. Robot mobile selon la revendication 1, dans lequel
le robot a une base supportant le bras de robot, et l'unité de conversion de tension est placée à l'intérieur de la base.

9. Robot mobile selon la revendication 1, dans lequel
le robot a une base supportant le bras de robot, et l'unité de conversion de tension est placée à l'extérieur de la base.

10. Robot mobile selon la revendication 1, dans lequel
le véhicule a une partie résistance de régénération qui convertit la puissance de régénération du premier moteur en chaleur.
